# FASCICULE DE BREVET EUROPEEN

(11) **EP 3 143 691 B1**
(45) Date de publication et mention de la délivrance du brevet: **07.05.2025**
(21) Numéro de dépôt: 15731637.3
(22) Date de dépôt: 11.05.2015
(51) Int. Cl.: H02S 20/25, E04D 1/02

(54) **PLAQUE DE SUPPORT POUR PANNEAU PHOTOVOLTAÏQUE**
STÜTZPLATTE FÜR FOTOVOLTAISCHE PANEELE
SUPPORT PLATE FOR PHOTOVOLTAIC PANEL

(30) Priorité: 16.05.2014 FR 1454405
(43) Date de publication de la demande: 22.03.2017
(73) Titulaire: GSE Integration, 93400 Saint-Ouen (FR)
(72) Inventeur: SABBAN, Ylan Gilles, F-92200 Neuilly Sur Seine (FR)
(74) Mandataire: Loyer & Abello
(86) Numéro de dépôt international: PCT/FR2015/051233
(87) Numéro de publication internationale: WO 2015/173505

(56) Documents cités:
- EP-A1- 1 184 526
- EP-A1- 2 541 162
- EP-A2- 2 565 341
- DE-A1- 102009 048 501
- DE-U1- 202010 014 168
- FR-A1- 2 977 009

## Description

L'invention concerne une plaque de support pour panneau photovoltaïque, permettant une installation étanche, simple et rapide du panneau et une récupération de chaleur produite par le panneau.

L'installation et la fixation des panneaux photovoltaïques sont traditionnellement effectuées à l'aide de systèmes de rails métalliques qui pèsent lourds et nécessitent des moyens de transport adaptés.

De plus, les systèmes traditionnels sont souvent exposés au risque d'infiltration d'eau.

On connaît un dispositif d'installation de panneaux photovoltaïques décrit et représenté dans le document EP-A-2541162, qui comporte une plaque thermoformée favorisant l'installation des panneaux photovoltaïques.

On connaît aussi un dispositif d'installation de panneaux photovoltaïques décrit et représenté dans le document EP1184526A1, qui comporte une plaque de support adaptée pour s'emboîter dans un panneau photovoltaïque. Cette plaque de support est adaptée pour s'emboîter dans un panneau photovoltaïque et permettre la fixation et l'intégration de ce panneau sur une toiture de bâtiment. La plaque comprend des moyens de chevauchement verticaux étanches, des moyens d'emboîtement latéraux étanches, des points de fixation de la plaque, et un évidement pour le passage des câbles et l'accès à la charpente de la toiture.

Bien que ce type de plaque permette une installation aisée d'un panneau photovoltaïques, elle n'est pas adaptée pour permettre la récupération de chaleur émise par le panneau photovoltaïque.

Dans ce but, la présente invention se rapporte à une plaque de support adaptée pour s'emboîter dans un panneau photovoltaïque et permettre la fixation et l'intégration de ce panneau sur une toiture de bâtiment, ladite plaque comprenant :
- des moyens de chevauchement verticaux étanches,
- des moyens d'emboîtement latéraux étanches adaptés pour coopérer avec une plaque voisine,
- des plots de positionnement de la plaque qui sont surélevés, caractérisée en ce que la plaque comporte une portion centrale formant capot qui est délimité par une face avant conçue pour être agencée en regard du panneau photovoltaïque et une face arrière, ledit capot comportant une bouche adaptée pour permettre la récupération de l'air interposé entre le panneau photovoltaïque et la face avant du capot.

Une telle conception permet de récupérer les calories dissipées par le panneau photovoltaïque, par exemple en aspirant l'air chaud contenu entre le dos du panneau photovoltaïque et le capot à travers la bouche prévue à cet effet.

Ainsi, l'ensemble constitué par la plaque et le panneau photovoltaïque permet de transformer l'énergie solaire en électricité et en chaleur directement exploitable au moyen d'un dispositif de ventilation par exemple.

Selon un exemple de réalisation préféré, la plaque présente un évidement pour le passage des câbles et l'accès à la charpente de la toiture, le capot étant une pièce rapportée adaptée pour obstruer ledit évidement.

Selon cet exemple de réalisation, le capot peut être monté sur une plaque préexistante.

De préférence, le capot est adapté pour être monté par emboîtement par coopération de forme sur la plaque.

Cette caractéristique permet une fixation simple et rapide du capot sur la plaque associée.

Selon un autre aspect, la bouche présente une forme tubulaire qui s'étend depuis la face arrière du capot et qui est conçue pour être raccordée sur un dispositif d'extraction d'air.

De plus, le capot délimite au moins un trou qui est adapté pour le passage de câbles.

La plaque comprend un bourrelet disposé de façon à éviter l'écoulement de l'eau en provenance du faîtage de la toiture dans l'évidement, le capot étant agencé à l'intérieur d'un périmètre délimité par ledit bourrelet.

Aussi, la plaque comporte au moins un renfort qui est interposé entre les moyens d'emboîtement latéraux et la toiture et qui est conçu pour empêcher l'écrasement desdits moyens d'emboîtement.

De plus, la plaque comporte une pluralité de rails de guidage qui sont agencés en amont de l'évidement suivant le sens d'écoulement de l'eau en provenance du faîtage de la toiture, et qui sont agencés globalement en V inversé pour dévier l'écoulement de l'eau sur les côtés latéraux de l'évidement.

L'invention concerne aussi un ensemble formé par un panneau photovoltaïque et une plaque emboîtée dans ledit panneau photovoltaïque.

D'autres caractéristiques et avantages de l'invention apparaîtront à la lecture de la description détaillée qui suit pour la compréhension de laquelle on se reportera aux dessins annexés dans lesquels :
- la figure 1 est une vue de dessus qui illustre la plaque de support équipée d'un capot pour la récupération de chaleur, selon l'invention ;
- la figure 2 est une vue en perspective qui illustre la plaque de support de la figure 1 ;
- le figure 3 est une vue de détail en section transversale suivant le trait 3-3 de la figure 1, qui illustre un bord latéral du capot de la figure 1 et le bourrelet de la plaque de support ;
- la figure 4 est une vue de détail en section transversale suivant le trait 4-4 de la figure 1, qui illustre la bouche de récupération d'air du capot ;
- la figure 5 est une vue de détail en section verticale suivant le trait 5-5 de la figure 1, qui illustre le bord inférieur du capot ;
- la figure 6 est une vue de détail en perspective, qui illustre un trou pour le passage de câbles formé sur le capot ;
- la figure 7 est une vue de côté qui illustre les moyens d'emboîtement latéraux étanches de la plaque de support ;
- la figure 8 est une vue de détail en coupe transversale, qui illustre un renfort des moyes d'emboîtement latéraux.

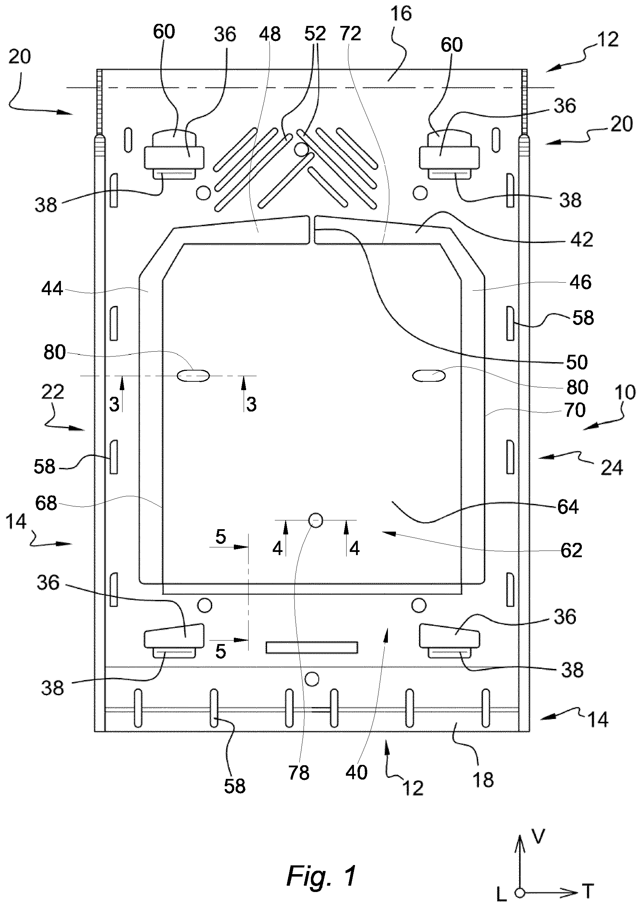

Dans la description et les revendications, on utilisera à titre non limitatif les expressions « supérieur », « inférieur » et leurs dérivés en référence à la partie supérieure et à la partie inférieure respectivement de la figure 1.

De plus, pour clarifier la description et les revendications, on adoptera à titre non limitatif la terminologie longitudinal, vertical et transversal en référence au trièdre L, V, T indiqué aux figures, l'axe vertical V étant considéré ici parallèle à la pente de la toiture, sans référence à la gravité terrestre.

Sur l'ensemble de ces figures, des références identiques ou analogues représentent des organes ou ensembles d'organes identiques ou analogues.

A noter que dans la présente demande de brevet, les termes « amont » et «aval » doivent s'entendre par rapport à la pente de la toiture sur laquelle la plaque est destinée à être montée et au sens de l'écoulement de l'eau de ruissèlement.

On a représenté à la figure 1 une plaque 10 de support adaptée pour s'emboîter dans un panneau photovoltaïque (non représenté) et permettre la fixation et l'intégration de ce panneau sur une toiture de bâtiment.

La plaque 10 comporte des moyens de chevauchement 12 verticaux étanches et des moyens d'emboîtement 14 latéraux étanches.

Les moyens de chevauchement 12 verticaux sont formés par une bande supérieure 16 transversale et par une bande inférieure 18 transversale qui sont adaptées pour permettre le chevauchement d'une plaque de support supérieure et d'une plaque de support inférieures juxtaposées verticalement.

Selon cette configuration, la bande inférieure 18 de la plaque 10 supérieure recouvre la bande supérieure 16 de la plaque 10 inférieur de façon à assurer une étanchéité parfaite.

Dans ce but, les moyens de chevauchement sont pourvus d'une graduation 20 qui est conçue pour ajuster le chevauchement vertical et le recouvrement entre deux plaques juxtaposées.

A cet effet, la graduation représente une échelle de mesure graduée par exemple, qui est gravée, imprimée ou moulée sur la bande supérieure 16 de la plaque 10 de support.

Ainsi, la graduation 20 permet de mesurer le chevauchement de deux plaques 10 de support et de garantir un recouvrement minimum et une bonne étanchéité.

De plus, la graduation 20 permet de régler le chevauchement de deux plaques 10 de support juxtaposées en fonction de la dimension du panneau photovoltaïque à installer, de sorte que les plaques de support peuvent s'adapter à différents formats de panneaux photovoltaïques.

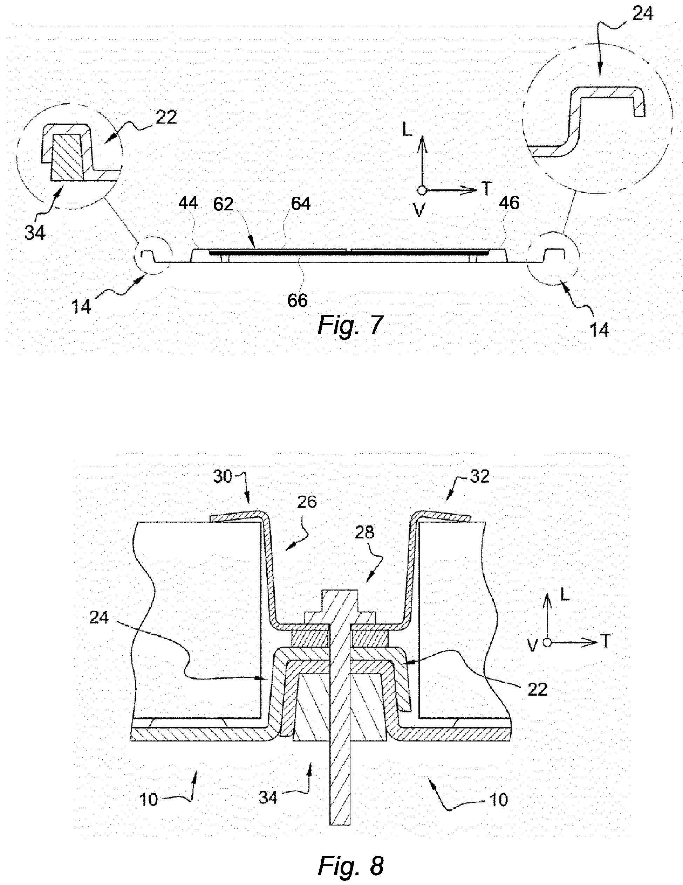

Comme on peut le voir à la figure 7, les moyens d'emboîtement 14 latéraux comprennent un premier profilé 22 et un second profilé 24 qui s'étendent chacun verticalement sur les côtés de la plaque 10 et qui présentent chacun une section en creux globalement en U inversé.

Le premier profilé 22 présente une forme adaptée pour être emboîtée dans le creux formé par le second profilé 24, lorsque deux plaques 10 de support voisines sont juxtaposées transversalement, pour assurer une bonne étanchéité entre les plaques.

Selon la figure 8, un cavalier 26 est fixé sur les profilés 22, 24 au moyen d'une vis 28.

La cavalier 26 comporte une première patte 30 de retenue qui est adaptée pour coopérer avec un panneau photovoltaïque porté par une première plaque 10, et une second patte 32 de retenue qui est adaptée pour coopérer avec un panneau photovoltaïque porté par une seconde plaque 10.

En cas de pression exercée sur les panneaux photovoltaïques, pression due au vent par exemple, les panneaux peuvent transmettre un effort de compression avec une composante verticale sur les moyens d'emboîtement 14.

Pour empêcher l'écrasement des moyens d'emboîtement 14, la plaque 10 de support est équipée d'un renfort 34 qui est interposé entre les moyens d'emboîtement 14 latéraux et la toiture.

Un écrasement des moyens d'emboîtement 14 est à éviter car il risquerait d'ouvrir un passage d'infiltration d'eau, par exemple par déformation du trou de passage de la vis 28, ou par un soulèvement du second profilé 24.

Le renfort 34 est une pièce rapportée qui est agencée dans le creux délimité par le premier profilé 22 des moyens d'emboîtement 14 pour s'opposer à l'écrasement des moyens d'emboîtement 14.

A titre non limitatif, le renfort 34 peut aussi être intégré et formé par le premier profilé 22, par exemple au cours du moulage du premier profilé 22.

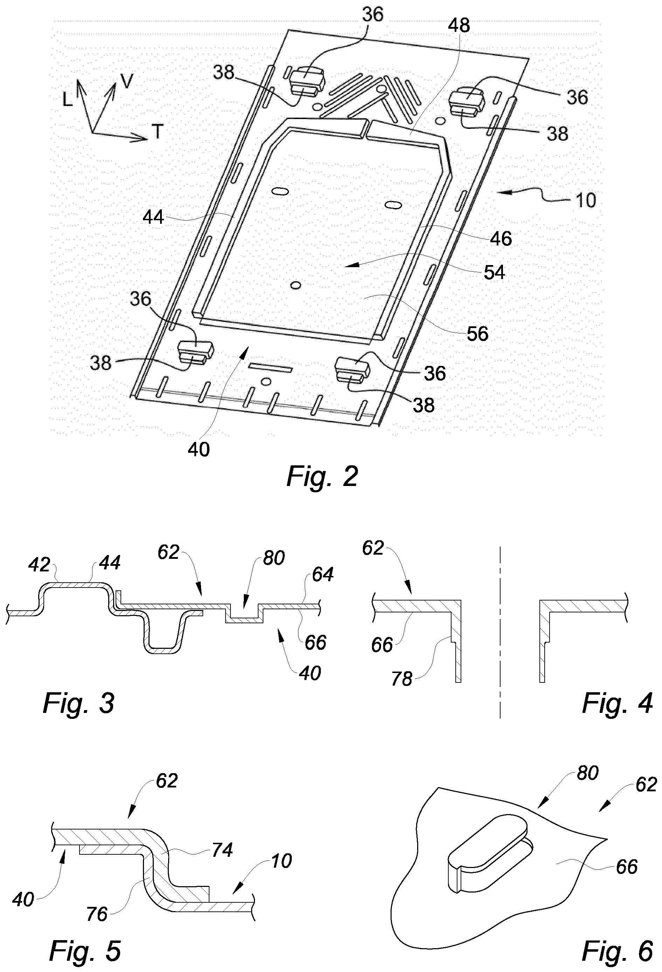

Selon un autre aspect, en référence aux figures 1 et 2, la plaque 10 de support comporte des plots de positionnement 36 du panneau photovoltaïque qui permettent le positionnement, le guidage, le calage du panneau photovoltaïque et le support des pieds des poseurs de panneaux.

De plus, chaque plot de positionnement 36 est associé à une zone de perçage 38 qui est agencée en aval des plots de positionnement 36 pour être protégée de l'écoulement d'eau et qui est surélevée de façon à éviter la pénétration d'eau.

On entend par zone de perçage 38 une zone qui est conçue pour permettre le perçage et le passage de moyens de fixation. La zone de perçage 38 peut comporter une empreinte ou une marque indiquant un emplacement de perçage, et/ou une zone pré-affaiblie mécaniquement pour favoriser le perçage par exemple.

Comme on peut le voir sur la figure 2, chaque zone de perçage 38 est moins surélevée que le plot de positionnement 36 associé pour permettre l'agencement de moyens de fixation, comme des vis (non représentées), sans que ces moyens de fixation ne dépassent le plot de positionnement 36 associé pour ne pas gêner la mise en place du panneau photovoltaïque.

Aussi, la plaque 10 de support délimite un évidement 40 pour le passage des câbles et l'accès à la charpente de la toiture.

L'évidement 40 est surmonté d'un bourrelet 42 qui est disposé de façon à éviter l'écoulement de l'eau en provenance du faîtage de la toiture dans l'évidement 40.

Plus particulièrement, le bourrelet 42 présente une forme en U inversé formé par une première portion latérale 44, une seconde portion latérale 46 et une portion supérieure 48 transversale.

Une rainure 50 est formée dans la portion supérieure 48 du bourrelet 42, permettant le passage de câbles entre la plaque 10 et le panneau photovoltaïque.

Comme on peut le voir à la figure 1, la plaque 10 comprend une pluralité de rails 52 de guidage qui sont agencés en amont de l'évidement 40 suivant le sens d'écoulement de l'eau en provenance du faîtage de la toiture, et qui sont agencés globalement en V inversé pour dévier l'écoulement de l'eau sur les côtés latéraux de l'évidement 40.

Chaque rail 52 de guidage forme un bourrelet rehaussé pour dévier l'écoulement de l'eau sur les côtés latéraux de l'évidement 40.

Aussi, la plaque 10 comprend des moyens de rehaussement 58 du panneau photovoltaïque qui permettent de ventiler le panneau photovoltaïque.

Enfin, la plaque 10 est équipée de cales 60 qui sont agencées en amont des plots de positionnement 36, et qui permettent de chasser l'eau en provenance du faîtage de la toiture.

De plus, les cales 60 sont conçues pour supporter le panneau photovoltaïque.

Selon un autre aspect, la plaque 10 de support comporte un capot 62 qui s'étend dans un plan transversal et vertical et qui est délimité par une face avant 64 qui est agencée en regard du panneau photovoltaïque et une face arrière 66.

Le capot 62 est monté par emboîtement par coopération de forme sur la plaque 10 de façon à obstruer l'évidement 40.

A titre non limitatif, le capot 62 peut être fixé par vissage ou par collage ou par tout autre moyen adapté.

En référence aux figures 1 à 3, le capot 62 est délimité par un premier bord latéral 68, un second bord latéral 70 opposé et un bord supérieur 72 qui coopèrent avec la première portion 44, la seconde portion latérale 46 et la portion supérieure 48 transversale du bourrelet 42 respectivement, de façon à bloquer le capot 62 dans une position d'obstruction de l'évidement 40.

De plus, comme on peut le voir en détail à la figure 5, le capot 62 est délimité par un bord inférieur 74 en forme de marche qui coopère avec un bord inférieur 76 de forme complémentaire de l'évidement 40.

Selon un exemple de réalisation préféré, le capot 62 est une pièce rapportée conçue pour être montée sur la plaque 10 de support, grâce à quoi le capot 62 peut équiper une plaque 10 de support existante.

Toutefois, à titre non limitatif, le capot 62 peut être réalisé venu de matière par moulage en une seule pièce avec la plaque 10 de support.

De même, le capot 62 peut être solidaire du panneau photovoltaïque, de sorte que l'ensemble constitué par le capot 62 et le panneau photovoltaïque est monté directement dans l'évidemment 40 de la plaque 10.

Selon un autre aspect de l'invention, le capot 62 comporte une bouche 78 de forme tubulaire, représentée en détail à la figure 4, qui s'étend depuis la face arrière 66 du capot 62 et qui est conçue pour être raccordée sur un dispositif d'extraction ou de ventilation (non représenté), comme un dispositif de ventilation double flux par exemple.

La bouche 78 est adaptée pour permettre la récupération de l'air qui est chauffé par le panneau photovoltaïque et qui est contenu entre le panneau photovoltaïque et la face avant 64 du capot 62.

En outre, le capot 62 délimite deux trous 80 qui sont chacun adaptés pour permettre le passage de câbles (non représentés), notamment les câbles raccordés sur le panneau photovoltaïque.

Comme on peut le voir aux figure 3 et 6, chaque trou 80 est associé à une excroissance qui s'étend depuis la face arrière 66 du capot 62 et qui permet de guider les câbles passés à travers les trous 80.

La présente description de l'invention est donnée à titre d'exemple non limitatif.

On comprendra que la plaque 10 peut aussi être conçue et dimensionnée pour permettre une pose en paysage.

## Revendications

1. Plaque (10) de support adaptée pour s'emboîter dans un panneau photovoltaïque et permettre la fixation et l'intégration de ce panneau sur une toiture de bâtiment, ladite plaque (10) comprenant :
- des moyens de chevauchement (12) verticaux étanches,
- des moyens d'emboîtement (14) latéraux étanches adaptés pour coopérer avec une plaque voisine,
- des plots de positionnement (36) de la plaque (10) qui sont surélevés,
où la plaque (10) comporte une portion centrale formant capot (62) qui est délimité par une face avant (64) conçue pour être agencée en regard du panneau photovoltaïque et une face arrière (66), ledit capot (62) comportant une bouche (78) adaptée pour permettre la récupération de l'air interposé entre le panneau photovoltaïque et la face avant (64) du capot (62), la plaque (10) présentant un évidement (40) pour le passage des câbles et l'accès à la charpente de la toiture, le capot (62) étant une pièce rapportée adaptée pour obstruer ledit évidement (40), le capot (62) étant adapté pour être monté par emboîtement par coopération de forme sur la plaque (10),
**caractérisée en ce que** a plaque (10) comprend un bourrelet (42) surmontant l'évidement (40)
et disposé de façon à éviter l'écoulement de l'eau en provenance du faîtage de la toiture dans l'évidement (40), le bourrelet (42) présentant une forme en U inversé formé par une première portion latérale (44), une seconde portion latérale (46) et une portion supérieure (48) transversale, le capot (62) étant agencé à l'intérieur d'un périmètre délimité par ledit bourrelet (42),
et dans laquelle le capot (62) est délimité par un premier bord latéral (68), un second bord latéral (70) opposé et un bord supérieur (72) qui coopèrent avec la première portion (44), la seconde portion latérale (46) et la portion supérieure (48) transversale du bourrelet (42) respectivement, de façon à bloquer le capot (62) dans une position d'obstruction de l'évidement (40).

2. Plaque (10) de support selon la revendication 1, **caractérisée en ce que** la bouche (78) présente une forme tubulaire qui s'étend depuis la face arrière (66) du capot (62) et qui est conçue pour être raccordée sur un dispositif d'extraction d'air.

3. Plaque (10) de support selon l'une quelconque des revendications 1 ou 2, **caractérisée en ce que** le capot (62) délimite au moins un trou (80) qui est adapté pour le passage de câbles.

4. Plaque (10) de support selon l'une quelconque des revendications précédentes, **caractérisée en ce qu'**elle comporte au moins un renfort (34) qui est interposé entre les moyens d'emboîtement (14) latéraux et la toiture et qui est conçu pour empêcher l'écrasement desdits moyens d'emboîtement (14).

5. Plaque (10) de support selon l'une quelconque des revendications précédentes, **caractérisée en ce qu'**elle comporte une pluralité de rails (52) de guidage qui sont agencés en amont de l'évidement (40) suivant le sens d'écoulement de l'eau en provenance du faîtage de la toiture, et qui sont agencés globalement en V inversé pour dévier l'écoulement de l'eau sur les côtés latéraux de l'évidement (40).

6. Ensemble formé par un panneau photovoltaïque et une plaque (10) conforme à l'une quelconque des revendications précédentes emboîtée dans ledit panneau photovoltaïque.

## Patentansprüche

1. Stützplatte (10), die ausgebildet ist zum Einfügen in ein Photovoltaikpaneel und die ermöglicht, dieses Paneel auf einem Gebäudedach zu befestigen und zu integrieren, wobei die Platte (10) umfasst:
- wasserdichte vertikale Überlappungsmittel (12),
- wasserdichte seitliche Eingriffsmittel (14), die ausgebildet sind zum Zusammenwirken mit einer benachbarten Platte,
- Positionierungszapfen (36) der Platte (10), die erhaben sind,
wobei die Platte (10) einen zentralen Bereich aufweist, der eine Abdeckung (62) bildet, die begrenzt ist durch eine Vorderseite (64) zur Anordnung gegenüber dem Photovoltaikpaneel und durch eine Rückseite (66), wobei die Abdeckung eine Öffnung (78) aufweist, die dazu eingerichtet ist, die Rückgewinnung der zwischen dem Photovoltaikpaneel und der Vorderseite (64) der Abdeckung (62) eingefügten Luft zu ermöglichen, wobei die Platte (10) eine Aussparung (40) zum Durchführen von Kabeln und für den Zugang zum Dachgerüst aufweist, wobei die Abdeckung (62) ein Einsatzelement zum Verschließen der Aussparung (40) ist, wobei die Abdeckung (62) für eine Montage an der Platte (10) durch formschlüssiges Einpassen ausgebildet ist,
**dadurch gekennzeichnet, dass**
die Platte (10) einen Wulst (42) aufweist, der über die Aussparung (40) übersteht und der angeordnet ist zum Vermeiden, dass Wasser vom Dachfirst in die Aussparung (40) fließt, wobei der Wulst (42) eine umgekehrte U-Form aufweist, die durch einen ersten Seitenbereich (44), einen zweiten Seitenbereich (46) und einen oberen Querbereich (48) gebildet ist, wobei die Abdeckung (62) innerhalb eines durch den Wulst (42) begrenzten Umfangs angeordnet ist
und wobei die Abdeckung (62) durch einen ersten Seitenrand (68), einen diesem gegenüberliegenden zweiten Seitenrand (70) und einen oberen Rand (72) begrenzt ist und die Ränder jeweils mit dem ersten Bereich (44), dem zweiten Seitenbereich (46) und dem oberen Querbereich (48) des Wulstes (42) derart zusammenwirken, dass die Abdeckung (62) in einer die Aussparung (40) verschließenden Position arretiert ist.

2. Stützplatte (10) nach Anspruch 1, **dadurch gekennzeichnet, dass** die Öffnung (78) eine Rohrform aufweist, die sich von der Rückseite (66) der Abdeckung (62) erstreckt und die für eine Verbindung mit einer Luftabsaugvorrichtung ausgebildet ist.

3. Stützplatte (10) nach einem der Ansprüche 1 oder 2, **dadurch gekennzeichnet, dass** die Abdeckung (62) ein Loch (80) definiert, dass für den Durchlass von Kabeln ausgebildet ist.

4. Stützplatte (10) nach einem der vorangehenden Ansprüche, **dadurch gekennzeichnet, dass** die Stützplatte mindestens eine Verstärkung aufweist, die zwischen den seitlichen Eingriffsmitteln (14) und dem Dach vorgesehen ist, um zu verhindern, dass die Eingriffsmittel (14) zerquetscht werden.

5. Stützplatte (10) nach einem der vorangehenden Ansprüche, **dadurch gekennzeichnet, dass** die Stützplatte eine Mehrzahl von Leitschienen (52) aufweist, die entsprechend der Richtung des Wasserflusses vom Dachfirst stromaufwärts der Aussparung (40) angeordnet sind und die allgemein in Form eines umgekehrten V ausgebildet sind, um den Wasserfluss an den lateralen Seiten der Aussparung (40) abzulenken.

6. Einheit, gebildet aus einem Photovoltaikpaneel und einer Platte (10) gemäß einem der vorangehenden Ansprüche, die in das Photovoltaikpaneel eingefügt ist.

## Claims

1. A support plate (10) adapted to fit in a photovoltaic panel and to allow the fastening and the integration of this panel on a building roof, said plate (10) comprising:
- watertight vertical overlap means (12),
- watertight lateral interlocking means (14) adapted to cooperate with an adjacent plate,
- positioning blocks (36) of the plate (10) which are raised,
wherein the plate (10) includes a central portion forming a cover (62) which is delimited by a front face (64) designed to be arranged opposite to the photovoltaic panel and a by rear face (66), said cover (62) including a mouth (78) adapted to allow the recovery of the air interposed between the photovoltaic panel and the front face (64) of the cover (62), the plate (10) having a recess (40) for the passage of cables and access to the roof structure, the cover (62) being an insert adapted to obstruct said recess (40), the cover (62) being adapted to be form-fittingly mounted on the plate (10)
**characterized in that** the plate (10) comprises a bead (42) surmounting the recess (10) and disposed so as to prevent the flow of water from the roof ridge into the recess (40), the bead (42) having an inverted U-shape formed by a first lateral portion (44), a second lateral portion (46) and a transverse upper portion (48), the cover (62) being arranged inside a perimeter delimited by said bead (42),
and wherein the cover (62) is delimited by a first lateral edge (68), an opposite second lateral edge (70) and an upper edge (72) which cooperate with the first portion (44), the second lateral portion (46) and the upper transverse portion (48) of the bead (42) respectively, so as to lock the cover (62) in a position obstructing the recess (40).

2. The support plate (10) according to claim 1, **characterized in that** the mouth (78) has a tubular shape which extends from the rear face (66) of the cover (62) and which is designed to be connected to an air extraction device.

3. The support plate (10) according to one of claim 1 or claim 2, **characterized in that** the cover (62) delimits at least one hole (80) which is adapted for the passage of cables.

4. The support plate (10) according to any one of the preceding claims, **characterized in that** it includes at least one reinforcement (34) which is interposed between the lateral interlocking means (14) and the roof and which is designed to prevent the crushing of said interlocking means (14).

5. The support plate (10) according to any one of the preceding claims, **characterized in that** it includes a plurality of guide rails (52) which are arranged upstream of the recess (40) along the direction of the water flow coming from the ridge of the roof, and which are arranged in a generally inverted V shape in order to divert the flow of the water on the lateral sides of the recess (40).

6. An assembly formed by a photovoltaic panel and a plate (10) in accordance with any one of the preceding claims fitted into said photovoltaic panel.
